# EUROPEAN PATENT APPLICATION

(11) **EP 1 650 991 A2**
(43) Date of publication of application: **26.04.2006**
(21) Application number: 05109358.1
(22) Date of filing: 07.10.2005
(51) Int. Cl.: H04Q 7/22

(54) **Apparatus for and a method of processing short messages in a terminal**

(30) Priority: 21.10.2004 KR 2004084583
(71) Applicant: Samsung Electronics Co., Ltd., Suwon-si, Gyeonggi-Do (KR)
(72) Inventor: Jeong, Jong-Un, 222-403 Hwanggol-maeul Byuksan Apt, Suwon-si, Gyeonggi-do (KR)
(74) Representative: Read, Matthew Charles

(57) **Abstract**

Apparatus and method for processing short messages in a wireless or wired terminal, such as a facsimile machine or MFP, by which reception result messages of short messages received via a network can be effectively transmitted to transmitting terminals via the network. When the short messages are received via a network, the terminal separates and stores reception result messages according to normal and erroneous reception thereof, and if the number of the stored reception result messages is greater than a preset number, automatically transmits the reception result messages to short message-transmitting terminals so as to provide convenience to users.

## Description

The present invention relates to apparatus for and a method of processing short messages in a terminal.

Short Message Service (SMS) is a type of wireless data communication service which allows users to transmit simple text messages via a mobile communication system, and its use has been rapidly increasing.

Recently, there have been intensive studies for applying the SMS to a fixed network such as a Public Switched Telephone Network (PSTN)/Integrated Service Digital Network (ISDN) as well as a mobile network. As a result, in order to provide the SMS via a wired network, the European Telecommunication Standard Institute (ETSI) has established ES 201 912 as a protocol stipulating transmission characteristic requirements between a wired SMS center (SMSC) and an SMS terminal (SMTE).

However, in a wired telephone developed to have an SMS function, short messages received from an SMSC can be displayed on an LCD window attached to the telephone but cannot be printed.

Accordingly, in order to solve the foregoing problems of the prior art, the assignee of the application proposed an approach as set forth in Korean Patent Application No. 10-2002-0048397, filed August 16, 2002, titled "Method of Managing Short Messages in Facsimile Machine of MFP Having SMS Function".

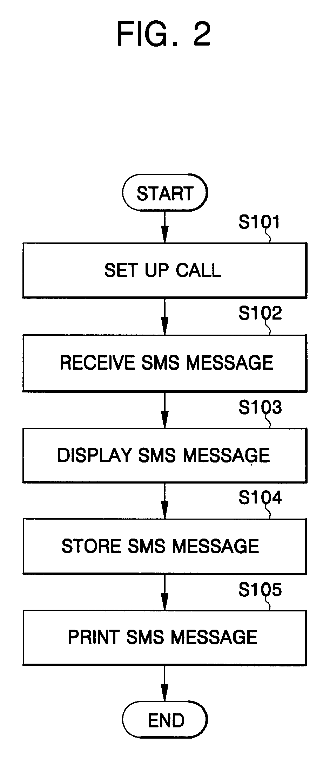

The above approach will be briefly described with reference to Figure 2.

Figure 2 is a flowchart illustrating a method for managing short messages in a facsimile machine or Multi-Function Product (MFP) having a conventional SMS function.

According to the method for processing short messages in a facsimile machine or an MFP having an SMS function, as shown in Figure 2, first a call is set up between terminals in S101. When a transmitting terminal sends an SMS message, a receiving terminal for example a facsimile machine or an MFP receives the SMS message from the transmitting terminal via a PSTN in S 102.

Upon receiving the SMS message, in S103, the facsimile machine or the MFP displays the SMS message on a display unit (for example, an LCD) so that a user can be notified of the SMS message.

In S104, the facsimile machine or the MFP stores the SMS message into a memory (not shown). Then, the facsimile machine or the MFP can print or clear the SMS message in response to user selection or automatically in S105.

In the method for managing short messages in a facsimile machine or Multi-Function Product (MFP) having an SMS function of the prior art, a user who received a short message can easily confirm the received message since it is displayed on a display panel and/or printed. However, it is inconvenient for a user who transmitted the short message since he/she cannot confirm whether the short message is normally received or abnormally transmitted due to an error.

The present invention seeks to provide an improved method of operating a terminal and a terminal for receiving short message(s).

According to a first aspect of the present invention there is provided a method of operating a terminal, the method comprising receiving a short message from a source, generating information relating to receipt of the short message, storing the receipt information for the source and transmitting a message, including the receipt information, to the source.

The method may comprise receiving a plurality of short messages from the source, generating information relating to receipt of each short message, storing the receipt information for the source and transmitting a message, including the receipt information, to the source. The method may comprise receiving the short message via a public switched telephone network. The receipt information and/or the message to the source may include a telephone number of the source, a telephone number of the terminal or at least one other receiving terminal, a time of receipt, an indication whether or not the short message was correctly received and/or a title of the short message.

The method may comprise displaying the short message and the receipt information.

The method may comprise receiving a plurality of short messages from a plurality of sources, generating information relating to receipt of each short message, storing each message and corresponding receipt information, comparing a number of stored short messages with a predetermined number and, if the number of stored short messages is greater that the predetermined number, then transmitting a respective message, including receipt information for at least one message for a respective source, to at least one source. The method may further comprise clearing at least one of the stored messages in response to a user selection after the transmitting a message to a given source.

According to a second aspect of the present invention there is provided a method of operating a terminal, the method comprising receiving a plurality of short messages from a plurality of sources, generating information relating to receipt of each short message, storing each message and receipt information for each message, comparing a number of stored short messages with a predetermined number and, if the number of stored short messages is greater that the predetermined number, then transmitting a message, including receipt information, to at least one source. The method may further comprise clearing at least one of the stored messages in response to a user selection after the transmitting a message to a given source.

According to a third aspect of the present invention there is provided a computer program which, when executed by a terminal, causes the terminal to perform the method.

According to a fourth aspect of the present invention there is provided a terminal configured to generate information relating to receipt of a short message received from a source, to store the receipt information for the source and to transmit a message, including the receipt information, to the source.

The terminal may comprise a wired terminal. The terminal may have a printing function, such as a terminal is a facsimile machine or a multifunctional device.

According to a fifth aspect of the present invention there is provided a method for processing short messages in a terminal, where, when short messages are received via a network, reception result information of the received short messages is generated according to the normal and erroneous reception thereof. The received short messages and the reception result information may be stored according to transmitting terminals; and messages containing the reception result information may be transmitted sequentially to the transmitting terminals via the network. The network may comprise PSTN.

A reception result information may comprise, individually or in any combination, a telephone number of a short message transmission terminal, a telephone number of a receiving terminal, short message reception time, short message reception result (OK/ERROR), short message title, and any other pertinent information.

The storing step may comprise: receiving the short messages via the network; checking whether the short messages are received normally or erroneously; and displaying the received short messages and reception result information thereof according to the result of the checking step, and storing the received short messages and reception result information thereof sequentially according to the transmitting terminals.

Each of the messages containing the reception result information may comprise at least one selected from the group consisting of the telephone number of a short message transmitting terminal, the telephone number of a short message receiving terminal, short message reception time, short message reception result (OK/ERROR) and short message title.

The transmitting step may comprise: comparing the number of the stored short messages received from the transmitting messages with a preset message number; and if the number of the stored short messages is at least the preset message number, transmitting the messages containing the short message reception result information sequentially to the transmitting terminals via the network, respectively.

The method may further comprise the step of clearing at least one of the stored messages in response to user selection after the transmitting step.

According to a sixth aspect of the present invention there is provided a method for processing short messages in a terminal, comprising the steps of: receiving short messages via a network; checking whether the short messages are received normally or erroneously; displaying the received short messages and reception result information thereof according to the result of the checking step and storing the received short messages and reception result information thereof sequentially according to the transmitting terminals; comparing the number of the stored short messages received from the transmitting messages with a preset message number; and if the number of the stored short messages is at least the preset message number, transmitting the messages containing the short message reception result information sequentially to the transmitting terminals via the network, respectively.

According to a seventh aspect of the invention there is provided a terminal capable of transmitting/receiving short messages comprising: a controller for generating reception result information of short messages according to the normal and erroneous reception thereof when the short messages are received via a network, and storing the received short messages and the reception result information according to transmitting terminals into a memory; and transmitting messages containing the reception result information to the transmitting terminals via the network, respectively, based upon the number of the received short messages.

The controller may comprise a memory for generating reception result information of short messages received via a network according to the normal and erroneous reception thereof, and storing the received short messages and the reception result information according to transmitting terminals.

The controller may comprise: a receiver for receiving the short messages via the network; a sensor for sensing whether the short messages are received normally or erroneously by the receiver; and a message processor for displaying and storing the received short messages and the reception result information according to the transmitting terminals based upon sensing results by the sensor.

The controller may include: a comparator for comparing the number of the stored short messages received from the transmitting messages with a preset message number; and a transmitter for transmitting the messages containing the short message reception result information sequentially to the transmitting terminals via the network, respectively, if the number of the stored short messages is at least the preset message number.

According to an eighth aspect of the present invention there is provided an apparatus for processing short messages in a terminal comprising: a receiver for receiving short message via a network; a sensor for sensing whether the short messages are received normally or erroneously; a memory storing the received short messages and the reception result information thereof sequentially according to transmitting terminals; a comparator for comparing the number of the stored short messages received from the transmitting messages with a preset message number; and a message processor for storing the received short messages and the reception result information into the memory sequentially according to the transmitting terminals, and if the number of the stored short messages is at least the preset message number, transmitting messages containing the reception result information to the transmitting terminals via the network, respectively.

Embodiments of the present invention will now be described, by way of example, with reference to Figures 3 to 5 of the accompanying drawings, in which:

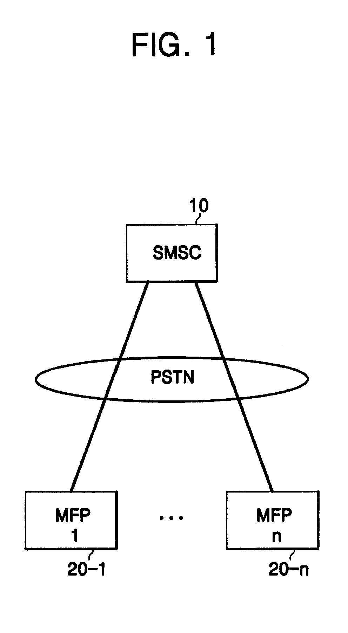

Figure 1 is a diagram illustrating a conventional facsimile machine or MFP having an SMS function connected to a network;
Figure 2 is a flowchart illustrating a method for managing short messages in a facsimile machine or MFP having a conventional SMS function;
Figure 3 is a schematic diagram illustrating the internal structure of an embodiment of a facsimile machine or MFP having an SMS function in accordance with the present invention;
Figure 4A and 4B are structure diagram illustrating an SMS protocol and a data link layer of the SMS protocol; and
Figure 5 is a flowchart illustrating an embodiment of a method of processing short messages in a facsimile machine or MFP having an SMS function in accordance with the present invention.

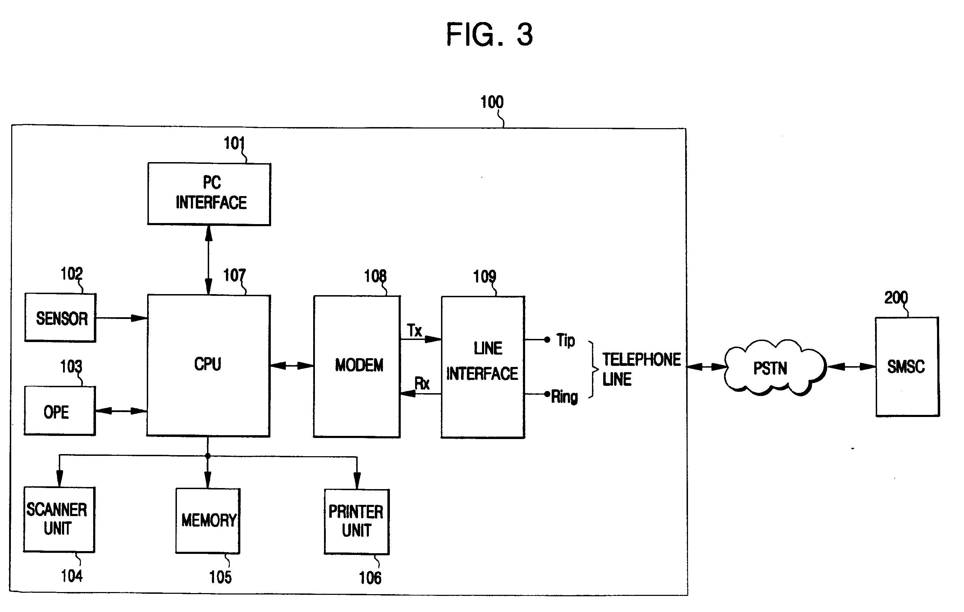

Figure 3 is a schematic diagram illustrating the internal structure of a facsimile machine 100 or Multi-Function Product (MFP) having a Short Message Service (SMS) function in accordance with the present invention.

The facsimile machine or MFP 100 can be connected to an SMS Centre (SMSC) 200 performing a short message service via a Public Switched Telephone Network (PSTN) network.

The facsimile machine or MFP 100 includes a PC interface 101, a sensor 102, an operation panel (OPE) 103, a scanner unit 104, a memory 105, a printer unit 106, a CPU 107, a modem 108 and a line interface 109. The modem 108 may use a communication protocol stipulated, for example in ES 201 912, for communicating with the SMSC 200.

The PC interface 101 is connected to a PC (not shown) and interfaces data from the PC to the CPU 107 in order to print or scan data.

The sensor 102 senses the remaining amount of recording sheets or manuscript data and provides the sensed amount or data to the CPU 107.

The scanner unit 104 scans the manuscript, converts an image of the manuscript into digital image data and provides the converted digital image data to the CPU 107.

The memory 105 stores program data, protocol data and text data and accesses or stores the data under the control of the CPU 107.

The memory 105 also stores a short message processing program, and, when a key corresponding to short message reception or transmission is inputted from a user via the OPE 103, accesses the short message processing program under the control of the CPU 107 in order to read a received text message, or generates and sends a text message.

In addition, under the control of the CPU 107, the memory 105 sorts result messages of short messages received via the PSTN based upon normal and erroneous reception, and stores the result messages as well as other reception information according to, for example, telephone numbers of transmitting terminals (which may also be referred to as "sources"). Such other reception information includes telephone numbers of receiving terminals, short message transmission/reception times and short message reception results, and may include titles of the short messages, if any.

The printer unit 106 prints scanned data or received short messages stored in the memory 105 under the control of the CPU 107 so as to be recognized by the user.

The modem 108 demodulates analog short messages and fax data received via the PSTN according to the SMS communication protocol into digital data to provide the digital data to the CPU 107, and modulates digital fax data or short messages together with receipt results thereof provided from the CPU 107 into analog signals to send the analog signals to the PSTN via the line interface 109.

The line interface 109 forms a calling loop for the PSTN under the control of the CPU 107 and interfaces data between the modem 108 and the PSTN.

The CPU 107 senses whether short messages are normally (correctly) or erroneously (for example the message contains an error (or errors) and/or is incomplete) received via the modem 108 and stores sensing result messages according to transmitting terminals into the memory 105.

When storing the sensing result messages in the memory 105, the CPU 107 may also store, for example, telephone number (of the receiving facsimile machine), short message transmission/reception times and short message titles if any into the memory 105.

In addition, the CPU 107 counts the number of result messages about short message reception stored in the memory 105 according to transmitting terminals, and if the number of result messages is greater than a preset number, sends the result messages about short message reception to corresponding terminals via the modem 108.

Such information sent from the receiving facsimile machine 100 via the PSTN to a transmitting terminal may include, for example, short message reception result, receiving facsimile machine telephone number, short message transmission/reception times and short message title, if any.

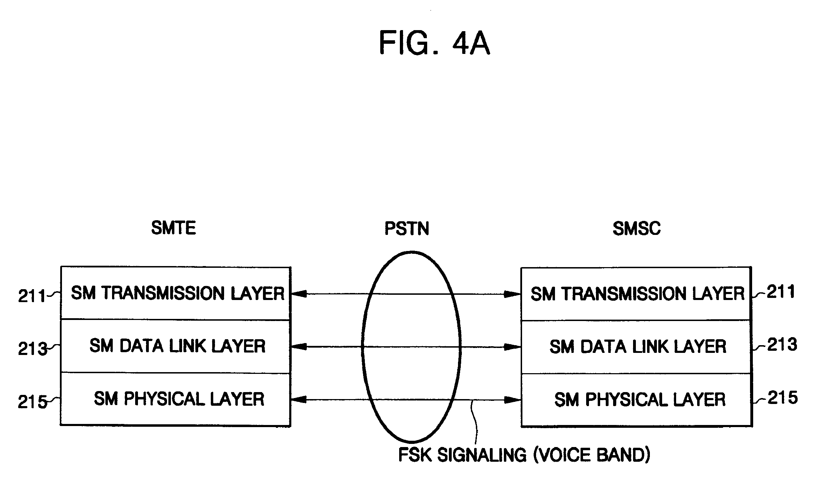

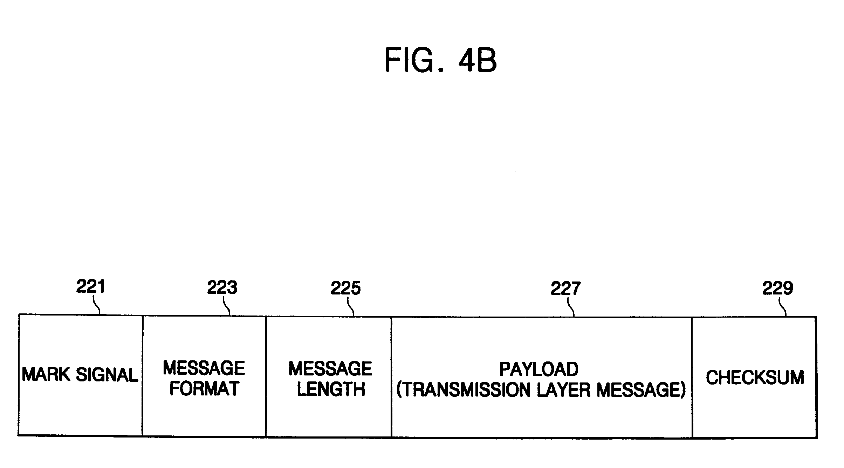

An SMS protocol (e.g., ES 201 912) and a protocol layer structure for the modem 108 will be now described with reference to Figures 4A and 4B.

Figures 4A and 4B schematically illustrate an SMS protocol (SMTE) and an SMS protocol data link layer (SMSC) respectively.

As shown in Figure 4A, the SMS protocol on a wired network includes a transmission layer 211, a data link layer 213 and a physical layer 215.

The transmission layer 211 defines various messages and parameters for short message transmission/reception, the data link layer 213 defines mark signals and checksums for reliable transmission/reception between the facsimile machine or MFP and the SMSC, and the physical layer 215 defines 1200 baud Frequency Shift Key (FSK) modulation at a voice band. That is, the modem requires a transmission rate of 1200bps or more since short messages are transmitted according to 1200 baud FSK modulation.

As shown in Figure 4B, in a short message data format, a message frame in the form of multiple messages is generated in the data link layer 213, and includes a mark signal 221 informing preparation for message frame reception, a message format word 223 informing the existence of a connected message, a message length word 225, a payload word 227 completed in the transmission layer 211 and a checksum word 229 for error sensing. The mark signal 221, the message format word 223 and the message length word 225 are added to the front end of the payload word 227, and the checksum word 229 is added to the rear end of the payload word 227.

The transmission layer message 227 may comprise a time parameter, a receiver parameter, a password parameter, a reply number parameter, a short message parameter and so on. Each parameter also includes a parameter type, parameter length and at least one parameter word.

Operation of apparatus for processing short messages in accordance with the present invention will now be described.

First, after call set up is established between transmitting and receiving terminals, short messages are sent from the transmitting terminal to the SMSC 200. The SMSC 200 sends the short messages to the receiving terminal (e.g., a facsimile machine) to which the short messages are directed.

Then, the facsimile machine 100 receives the short messages sent from the SMSC 200 via the PSTN with the line interface 109 and the modem 108.

The short messages are demodulated by the modem 108 and provided to the CPU 107.

Upon receiving the short messages received via the modem 108 in a format as shown in Figure 4B, the CPU 107 separates normally received ones from erroneously received ones based upon checksum field information. The CPU 107 displays the received short messages on a display device, e.g., an LCD (not shown) in case of normal reception, and displays a result of erroneous reception of the short message on the display device in case of erroneous reception.

Also, the CPU 107 stores the normally received short messages together with other detailed information into the memory 105, and the erroneously received short messages together with other detailed information and error result messages into the memory 105. The detailed information includes the telephone number of a transmitting terminal, the telephone number of a receiving terminal, short message reception time, short message reception result and so on.

In storing the short messages and the detailed information into the memory 105, the CPU 107 stores the normally received short messages and the erroneously received short messages into different regions, respectively.

The CPU 107 periodically accesses the memory 105 to check the number of the short message reception result messages (including normal and erroneous reception) stored in the memory 105, and if the number of the whole short message reception result messages stored in the memory 105 is at least a preset number, transmits the short message reception result messages via the PSTN sequentially to the transmitting terminals, which are registered in the memory 105.

That is, the CPU 107 selects the telephone number of the first one of the transmitting terminals stored in the memory 105 to transmit a short message reception result message to the transmitting terminal according to the selected telephone number via the PSTN. Then, the CPU 107 selects telephone numbers of next transmitting terminals stored in the memory to transmit short message reception result messages sequentially to the transmitting terminals according to the selected telephone numbers. Information contained in each reception result message sent to each transmitting terminal may include the telephone number of the short message-transmitting terminal, the telephone number of the short message-receiving terminal, short message transmission time, short message reception time (normal/erroneous) and the title of each short message if any.

As a result, the CPU 107 separates the normally received short messages from the erroneously received short messages, groups the short messages according to the transmitting terminals, and stores the short messages in storage regions of the memory 105 according to the transmitting terminals, separated according to normal and erroneous reception. Information stored at this time may include the telephone number of each transmitting terminal, the short message reception time transmitted from the transmitting terminal and short message reception result.

The CPU 107 periodically checks the number of the reception result messages stored in the memory 105, and if the number of the reception result messages is greater than a preset number, sequentially transmits the reception result messages to the corresponding transmitting terminals via the PSTN. Each of the reception result messages transmitted to the transmitting terminals includes the telephone number of the receiving terminal and short message reception time.

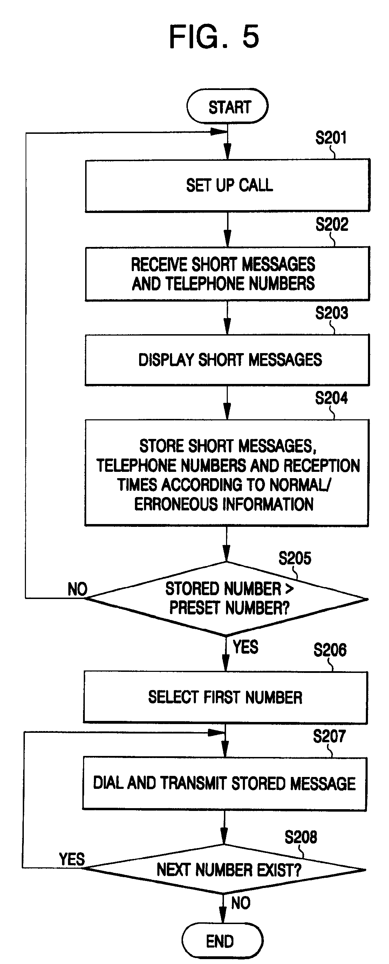

Figure 5 is a flowchart illustrating an example of a method for processing short messages in a facsimile machine or MFP having an SMS function in accordance with the present invention.

As shown in Figure 5, a call is set up between a transmitting terminal and a receiving terminal (for example, a facsimile machine or MFP) in S201, and a short message is received via the PSTN from the transmitting terminal in S202. The short message contains the telephone number of the transmitting terminal, and the checksum word (see Figure 4B) is used to check whether the short message is received normally or erroneously.

The facsimile machine or MFP displays the short message received via the PSTN on a display (e.g., LCD) together with the telephone number of the transmitting terminal in S203. A normally received short message (correctly-received short message) is displayed as it is on the display together with the telephone number of the transmitting terminal. In case that the short message is erroneously received, a warning message is shown on the display to notify a user of an error.

After the short message is displayed, the facsimile machine or MFP stores the short message and additional information into the memory in S204. The additional information may include the telephone number of the transmitting terminal, the telephone number of the receiving terminal, short message reception time and a reception result message (OK/ERROR) about normal and erroneous reception of the short message.

As short messages are received from a plurality of transmitting terminals and stored into the memory according to the above steps, the facsimile machine or MFP periodically accesses the memory and checks the number of messages stored therein in order to judge whether or not the number of stored messages is greater than a preset number in S205.

If it is judged that the short messages stored in the memory do not exceed the preset number, more short messages are continuously received and stored into the memory until the total number of received short messages is greater than the preset number. If the total number of short messages stored in the memory exceeds the preset number, the telephone number of the first transmitting terminal is selected in S206. A short message reception result message stored in the memory is sent to the first transmitting terminal according to the telephone number thereof in S207. The reception result message sent to the transmitting terminal includes, for example, receiving terminal telephone number, short message reception time and short message title if any.

When the reception result message is transmitted to the first transmitting terminal, it is judged whether telephone number of a next transmitting terminal and reception result information for a short message received from the next transmitting terminal exist or not in the memory in S208.

If the next telephone number and the short message reception result information exist, the next transmitting terminal telephone number is selected, and a reception result message for the short message received from the next terminal is transmitted in succession to the next terminal via the PSTN. After all of the reception result messages for the stored short messages are transmitted to the transmitting terminals, the stored short messages may be cleared according to user selection.

When the short message reception result messages are all transmitted to the transmitting terminals whose information is stored in the memory, the process may be repeated again from step S201.

In summary, in the embodiment hereinbefore described, after call set up between the SMSC and the facsimile machine or MFP, the SMSC transmits received short messages and telephone numbers of transmitting terminals to a receiving terminal (the facsimile machine or MFP) according to the SMS protocol (cf. ETSI ES 201 912), and the facsimile machine or MFP receives the short messages and the transmitting terminal telephone numbers.

Then, the facsimile machine or MFP displays the received short messages and the transmitting terminal telephone numbers on a display such as an LCD.

The facsimile machine or MFP classifies the SMS messages and telephone numbers according to normal and erroneous reception, and stores short message reception result information into the memory.

Then, in each situation of normal and erroneous reception, the total number of messages registered in the memory is compared with a preset message number. If the total number of registered message is equal to or less than the preset message number, more short messages are received continuously. If the total number of registered messages exceeds the preset message number, the telephone number of the first transmitting terminal stored in the memory is selected.

Then, a short message reception result message previously stored in the memory is transmitted to the selected telephone number via the PSTN.

Upon completion of transmission, a next telephone number is selected automatically, and a short message reception result message corresponding to the next telephone number is read from the memory and transmitted to the telephone number. When a short message reception result message is transmitted to the last telephone number, the process is completed.

Although a PSTN has been illustrated, those skilled in the art will appreciate that the present invention can be applied to wired/wireless networks other than the PSTN. In addition, although a facsimile machine or MFP has been illustrated, it will be also understood that the invention can be applied equally to all types of terminals connected to other wired networks.

In the embodiment of the present invention hereinbefore described, when short messages are received via a network, the wired terminal separates and stores reception result messages according to normal and erroneous reception thereof, and if the number of the stored reception result messages exceeds a preset number, automatically transmits the reception result messages to short message-transmitting terminals, so as to provide convenience to users.

Although several embodiments of the present invention have been shown and described, it will be appreciated by those skilled in the art that changes may be made in these embodiments.

## Claims

1. A method of operating a terminal (100), the method comprising:
receiving a short message from a source;
generating information relating to receipt of the short message;
storing said receipt information for said source; and
transmitting a message, including said receipt information, to the source.

2. A method according to claim 1, comprising:
receiving a plurality of short messages from the source;
generating information relating to receipt of each short message;
storing said receipt information for said source; and
transmitting a message, including said receipt information, to the source.

3. A method according to claim 1 or 2, comprising:
receiving said short message via a public switched telephone network.

4. A method according to any preceding claim, wherein said receipt information includes:
a telephone number of the source;
a telephone number of the terminal or at least one other receiving terminal;
a time of receipt;
an indication whether or not the short message was correctly received; and/or
a title of the short message.

5. A method according to any preceding claim, comprising:
displaying the short message and said receipt information.

6. A method according to any preceding claim, wherein message comprises:
a telephone number of the source;
a telephone number of the terminal or at least one other receiving terminal;
a time of receipt;
an indication whether or not the short message was correctly received; and/or
a title of the short message.

7. A method according to any preceding claim, comprising:
receiving a plurality of short messages from a plurality of sources;
generating information relating to receipt of each short message;
storing each message and corresponding receipt information, preferably sequentially in memory;
comparing a number of stored short messages with a predetermined number; and
if the number of stored short messages is greater that the predetermined number, then transmitting at least one message, including receipt information, to at least one source.

8. A method according to claim 7, further comprising:
clearing at least one of the stored messages in response to a user selection after the transmitting a message to a given source.

9. A method of operating a terminal (100), the method comprising:
receiving a plurality of short messages from a plurality of sources;
generating information relating to receipt of each short message;
storing each message and corresponding receipt information, preferably sequentially in memory;
comparing a number of stored short messages with a predetermined number; and
if the number of stored short messages is greater that the predetermined number, then transmitting at least one message, including receipt information, to at least one source.

10. A computer program which, when executed by a terminal, causes the terminal to perform a method according to any preceding claim.

11. A terminal (100) configured to generate information relating to receipt of a short message received from a source, to store said receipt information for said source and to transmit a message, including said receipt information, to the source.

12. A terminal (100) according to claim 11, wherein the terminal comprises a wired terminal.

13. A terminal (100) according to claim 11 or 12, wherein the terminal has a printing function.

14. A terminal (100) according to any one of claims 11 to 13, wherein the terminal is a facsimile machine.

15. A terminal (100) according to any one of claims 11 to 14, wherein the terminal is a multifunctional device.

16. A method for processing short messages in a terminal, comprising:
receiving at least one short message from at least one transmitting terminal via a network;
generating a reception result information of the at least one short message according to at least one of a normal reception of the at least one short message and an erroneous reception of the at least one short message, and
storing the at least one short message and the reception result information in accordance with the at least one transmitting terminal; and
transmitting at least one information message comprising the reception result information to the at least one transmitting terminal via the network.

17. The method according to claim 16, wherein the network comprises Public Switched Telephone Network.

18. The method according to claim16, wherein the reception result information comprises at least one of: a telephone number of the transmitting terminal; a telephone number of a receiving terminal which receives the at least one short message; a reception time of the at least one short message; a reception result indicative of the normal or the erroneous reception of the at least one short message; and a title of the at least one short message.

19. The method according to claim16, wherein the storing comprises:
receiving the at least one short message via the network;
checking whether the at least one short message is received normally or erroneously;
displaying the at least one short message and the reception result information according to a result of the checking; and
storing the at least one short message and the reception result information in accordance with the transmitting terminal.

20. The method according to claim16, wherein the at least one information message comprises at least one of: a telephone number of the transmitting terminal; a telephone number of a receiving terminal which receives the at least one short message; a reception time of the at least one short message; a reception result indicative of the normal or the erroneous reception of the at least one short message; and a title of the at least one short message.

21. The method according to claim16, wherein the receiving comprises receiving a plurality of short messages from a plurality of transmitting terminals via a network, the generating comprises generating a reception result information for each of the plurality of the short messages according to at least one of a normal reception of each of the plurality of the short messages and an erroneous reception of each of the plurality of the short messages, storing comprises storing each of the plurality of short messages and the reception result information, and the transmitting comprises:
comparing the total number of stored short messages of the plurality of the short messages with a preset message number; and
if the total number of the stored short messages is greater than the preset message number, transmitting information messages comprising the reception result information, sequentially to at least one of the plurality of the transmitting terminals via the network, respectively.

22. The method according to claim 21, further comprising clearing at least one of the stored messages in response to a user selection after the transmitting step.

23. A terminal comprising:
a microprocessor which generates reception result information for at least one short message received from a transmitting terminal according to at least one of a normal reception of the at least one short message and an erroneous reception of the at least one short message; and
a memory which stores the at least one short message received from the transmitting terminal and the reception result information, according to the transmitting terminal;
wherein at least one information message comprising the reception result information is transmitted to the transmitting terminal via the network.

24. The terminal according to claim 23, wherein the network comprises Public Switched Telephone Network.

25. The terminal according to claim 23, wherein the reception result information stored in the memory comprises at least one of a telephone number of transmission the transmitting terminal, a telephone number of a receiving terminal which receives the at least one short message; a reception time of the at least one short message; a reception result indicative of the normal or the erroneous reception of the at least one short message; and a title of the at least one short message.

26. The terminal according to claim 23, further comprising:
a receiver which receives the at least one short message via the network;
a sensor which senses whether the at least one short message is received normally or erroneously; and
a message processor which facilitates displaying and storing of the at least one short messages and the reception result information in accordance with the transmitting terminal based upon sensing results by the sensor.

27. The terminal according to claim 23, wherein the at least one information message comprises at least one of a telephone number of the transmitting terminal, a telephone number of a receiving terminal which receives the at least one short message, a reception time of the at least one short message, a reception result indicative of the normal or the erroneous reception of the at least one short message, and a title of the at least one short message.

28. The terminal according to claim 23, wherein the terminal is configures to receive and store a plurality of short messages, the terminal further comprising:
a comparator which compares a total number of the stored short messages received from at least one of a plurality if transmitting terminals with a preset message number; and
a transmitter which transmits information messages, each of the information messages comprising the reception result information for a respective one of the plurality of the short messages, sequentially to the at least one of the plurality of transmitting terminals via the network, respectively, if the number of the stored short messages is greater than the preset message number.

29. An apparatus for processing short messages in a terminal comprising:
a receiver configured to receive at least one of a plurality of short messages from at least one of a plurality of transmitting terminals via a network;
a sensor configured to sense whether the at least one of the plurality of short messages is received normally or erroneously;
a memory configured to store each of the plurality of the short messages and corresponding reception result information indicative of the normal or the erroneous reception of each of the plurality of short message, sequentially according to transmitting terminals;
a comparator configured to compare a total number of the stored short messages received from the at least one of the plurality of transmitting terminals with a preset message number; and
a message processor configured to store the plurality of the short messages and the corresponding reception result information into the memory sequentially, in accordance with the at least one of the plurality of the transmitting terminals, and if the total number of the stored short messages is greater than the preset message number, to transmit messages comprising the reception result information to the at least one of the plurality of the transmitting terminals via the network, respectively.

30. The apparatus according to claim 29, wherein each of the messages comprising the reception result information transmitted to at least one of the plurality of the transmitting terminals comprises at least one of a telephone number of a corresponding transmitting terminal of the plurality of the transmitting terminals, a telephone number of a receiving terminal which receives the at least one of the plurality of the short messages, a reception time of the at least one of the plurality of the short messages; the corresponding reception result, and a title of the at least one of the plurality of the short messages.

31. The apparatus according to claim 29, wherein the reception result information stored in the memory comprises at least one of a telephone number of the at least one of the plurality of the transmission terminals, a telephone number of a receiving terminal which receives the at least one of the plurality of the short messages, a reception time of the at least one of the plurality of short messages, the reception result, and at title of the at least one of the plurality of the short messages.

32. The method as claimed in claim 14, wherein the terminal comprises a wired terminal.

33. The terminal according to claim 23, wherein the terminal comprises a wired terminal.

34. The apparatus according to claim 29, wherein the terminal comprises a wired terminal.
